# EUROPÄISCHE PATENTSCHRIFT

(11) **EP 3 910 745 B1**
(45) Veröffentlichungstag und Bekanntmachung des Hinweises auf die Patenterteilung: **25.11.2026**
(21) Anmeldenummer: 21172437.2
(22) Anmeldetag: 06.05.2021
(51) Int. Cl.: H02G 3/08, H02G 3/12, H02G 3/04

(54) **KABELAUSLASSELEMENT FÜR DIE ELEKTROINSTALLATION SOWIE MONTAGESYSTEM FÜR DIE ELEKTROINSTALLATION BESTEHEND AUS EINEM KABELAUSLASSELEMENT UND EINEM ABSCHLUSSELEMENT**
CABLE OUTLET ELEMENT FOR ELECTRICAL INSTALLATION AND MOUNTING SYSTEM FOR THE ELECTRICAL INSTALLATION COMPRISING A CABLE OUTLET ELEMENT AND A CLOSURE ELEMENT
ÉLÉMENT DE SORTIE DE CÂBLE POUR L'INSTALLATION ÉLECTRIQUE, AINSI QUE SYSTÈME DE MONTAGE POUR L'INSTALLATION ÉLECTRIQUE COMPOSÉ D'UN ÉLÉMENT DE SORTIE DE CÂBLE ET D'UN ÉLÉMENT DE FERMETURE

(30) Priorität: 14.05.2020 DE 202020102705 U
(43) Veröffentlichungstag der Anmeldung: 17.11.2021
(73) Patentinhaber: f-tronic GmbH, 66131 Saarbrücken (DE)
(72) Erfinder: Fohs, Peter, 66399 Mandelbachtal (DE)
(74) Vertreter: Keil & Schaafhausen Patentanwälte PartGmbB

(56) Entgegenhaltungen:
- EP-A1- 1 511 144
- EP-A1- 3 091 624
- EP-A1- 3 518 360
- DE-U1- 202015 101 560
- DE-U1- 202019 000 189
- GAO: "GAO 629556 Hohlwand-Wandleuchten-Anschlussdose", CONRAD.DE, 4 August 2010 (2010-08-04), pages 1 - 4, XP055842482, Retrieved from the Internet <URL:https://www.conrad.de/de/p/gao-629556-hohlwand-wandleuchten-anschlussdose-x-t-35-mm-x-45-mm-629556.html#boughtTogether> [retrieved on 20210920]
- KAISER: "Kaiser Cavity Wall Wall Auslaß Box 9248 (Pack of 25)", AMAZON.DE, 22 May 2013 (2013-05-22), XP055842634, Retrieved from the Internet <URL:https://www.amazon.de/KAISER-Hohlwand-Wandausla%C3%9Fdose-9248-01-VPE-25/dp/B00CXO19HO> [retrieved on 20210920]
- KENUCO: "Amazon.com : KENUCO AB110 DS-1259ZJ Angled Ceiling Mount for Dome Camera (White) : Electronics", AMAZON.COM, 25 March 2016 (2016-03-25), XP093088502, Retrieved from the Internet <URL:https://www.amazon.com/AB110-DS-1259ZJ-Angled-Ceiling-Camera/dp/B01DF9YFNU/ref=pd_bxgy_sccl_1/133-9208298-7557938?pd_rd_w=IS1Rc&content-id=amzn1.sym.43d28dfc-aa4f-4ef6-b591-5ab7095e137f&pf_rd_p=43d28dfc-aa4f-4ef6-b591-5ab7095e137f&pf_rd_r=DW9TPKFE8BQTT38SD2Q8&pd_rd_wg=9wWNZ&pd_rd_r=733d23dd-381d-4e7> [retrieved on 20231004]
- HITRON SYSTEMS INC.: "Hitron New Angle Bracket for Dome Camera", 11 March 2015 (2015-03-11), XP093088505, Retrieved from the Internet <URL:https://www.youtube.com/watch?v=SLWiG75ARHQ> [retrieved on 20231004]

## Beschreibung

Die vorliegende Erfindung betrifft ein Kabelauslasselement für die Elektroinstallation nach dem Oberbegriff des Anspruchs 1 sowie ein Montagesystem für die Elektroinstallation gemäß Anspruch 4.

Es sind bereits Kabelauslasselemente für die Elektroinstallation bekannt. Die Kabelauslasselemente werden benötigt, um bei einem in einer Wand geführten Kabel eine Position zu definieren, an der das Kabel aus der Wand austritt. Dies ist beispielsweise sinnvoll, wenn eine Beleuchtung angebracht werden soll. Das Kabelauslasselement definiert dann an der Wand oder an der Decke, an welcher Stelle das Kabel aus der Wand kommt. Installationsdosen mit einem schrägen Übergang zwischen Stirnseite und Seitenwand sind aus der EP 3 518 360 A1 sowie aus dem Katalog der Firma KAISER GmbH & Co. KG mit der Bezeichnung "KAISER Electrical installation" vom 30. Juli 2018 bekannt.

Diese Kabelauslasselemente weisen eine zylindrische Form auf. Dadurch lassen sich mittels einer Bohrkrone (Topfbohrer) oder mittels eines Bohrers mit einem passenden Durchmesser passende Öffnungen in die Wand einbringen, in die die zylinderförmigen Auslasselemente einsetzbar sind. Dies gilt sowohl für massive Wände sowie auch für Beplankungen von Hohlwänden.

Eine erste der beiden Grundflächen des Zylinders des Kabelauslasselements bildet eine Kabelauslassöffnung. Wenn das Kabelauslasselement fertig montiert ist, schließt diese Kabelauslassöffnung vorteilhaft flächenbündig mit der Wand bzw. mit der Sichtseite der Beplankung der Hohlwand ab. Die Sichtseite der Beplankung ist die Fläche der Beplankung, die in dem Raum liegt, nicht jedoch die Seite der Beplankung, die dem Hohlraum zwischen den sich gegenüberliegenden Beplankungen der Hohlwand zugewandt ist.

Im Bereich der zweiten der beiden Grundflächen des Zylinders ist eine Einlassfläche angeordnet.

Es ist möglich, durch diese Einlassfläche ein Kabel einzuführen, das durch das Kabelauslasselement hindurchgeführt wird und aus der Wand bzw. Decke austritt.

Es ist ebenso möglich, dass an dieser Einlassfläche ein Leerrohr endet, durch das ein Kabel geführt ist. Dieses Leerrohr kann ein starres Leerrohr sein oder auch ein flexibler Schlauch. Die Ausführung der Installation mittels eines Leerrohrs hat den Vorteil, dass durch dieses Leerrohr nach dessen Installation Kabel gezogen werden müssen. Dies ist vorteilhaft, wenn die Kabel erneuert werden müssen. Die neuen Kabel können dann durch die vorhandenen Leerrohre der Installation gezogen werden, ohne dass Wände aufgestemmt werden müssen oder Beplankungen von Hohlwandkonstruktionen beschädigt werden müssen.

Insbesondere, wenn die Kabel nachträglich durch die Leerrohre gezogen werden müssen, erweist es sich als vorteilhaft, wenn Richtungsänderungen des Leerrohres entlang dessen Länge in einem möglichst stumpfen Winkel erfolgen. Erfolgt eine solche Richtungsänderung in einer Form, die mehr oder weniger einem Knick in dem Leerrohr entspricht, wird es schwierig und unter Umständen unmöglich, nachträglich ein Kabel durch dieses Leerrohr zu ziehen.

Deswegen sind bereits Kabelauslasselemente bekennt, bei denen die Flächennormale dieser Einlassfläche schräg orientiert ist zur Mittellängsachse des Zylinders derart, dass die Einlassfläche einen Schnitt durch den Zylinder darstellt. Dieser Schnitt geht zum einen teilweise durch die zweite Grundfläche. Dieser Schnitt erstreckt sich von dort weiter durch die Seitenwand des Zylinders in Richtung der ersten Grundfläche derart, dass dieser Schnitt zwischen der zweiten Grundfläche und der ersten Grundfläche aus dem Zylinder austritt.

Dadurch ergibt sich eine Einführrichtung für ein Leerrohr in dieses Kabelauslasselement, bei dem die Längsrichtung des Leerrohres einen stumpfen Winkel mit der Mittellängsachse des Zylinders bildet. Die Kabel und damit auch die Leerrohre werden parallel zur Oberfläche der Wand geführt. Wenn ein Kabel aus der Wand austreten soll, ist dies mit einer Richtungsänderung verbunden, die im Ergebnis 90 Grad beträgt. Um einen Knick im Verlauf des Leerrohres im Übergang zu dem Kabelauslasselement zu vermeiden, hat es sich als vorteilhaft erwiesen, das Leerrohr in diesem stumpfen Winkel zur Mittellängsachse des Kabelauslasselementes in das Kabelauslasselement einzuführen. Damit kann die Richtungsänderung in der Wand über eine größere Länge in Form einer Kurve mit einem Krümmungsradius vorgenommen werden, der ausreichend groß ist, so dass nachträglich ein Kabel durch dieses Leerrohr gezogen werden kann. Diese Verlegung des Leerrohres mit der Krümmung gilt insbesondere dann, wenn es sich bei dem Leerrohr um einen Schlauch handelt, der entsprechend flexibel ist. Dies gilt insbesondere auch bei einer Hohlwandinstallation, weil hierbei der Raum zwischen den Beplankungen in nahezu voller Tiefe für die Führung des Leerrohres zur Verfügung steht, ohne dass hierzu eine Wand in einer entsprechenden Tiefe aufgestemmt werden müsste.

Der vorliegenden Erfindung liegt die Aufgabe zu Grunde, das Kabelauslasselement zu verbessern.

Diese Aufgabe wird durch das Kabelauslasselement mit den Merkmalen des Anspruchs 1 sowie dem Montagesystem mit den Merkmalen des Anspruchs 4 gelöst. Bevorzugte Ausführungsformen der Erfindung sind aus den abhängigen Ansprüchen ersichtlich.

Gemäß der vorliegenden Erfindung ist vorgesehen, dass die Mittellängsachse des Zylinders die Einlassfläche schneidet.

Bei den bisher bekannten Kabelauslasselementen wurde der schräge Schnitt im Bereich der zweiten Grundfläche des Zylinders so ausgeführt, dass lediglich ein geringer Teil (weniger als 50 %) der zweiten Grundfläche durch den Schnitt abgeschnitten wurde.

Demgegenüber ergibt sich bei der Lage der Einlassfläche nach der vorliegenden Erfindung, dass sich eine bessere Führung des Leerrohres relativ zur Mittellängsachse des Kabelauslasselementes ergibt. Vorteilhaft ist die Führung des Leerrohres zwischen den Beplankungen einer Hohlwand nach wie vor problemlos möglich. Der Winkel zwischen der Längsrichtung des Leerrohres in der Ebene der Einlassfläche und der Mittellängsachse des Kabelauslasselementes ist bei der Ausführung nach der vorliegenden Erfindung deutlich stumpfer als dies beim Stand der Technik der Fall ist. Das nachträgliche Einziehen von Kabeln wird dadurch wesentlich erleichtert.

Als weiterer Vorteil ergibt sich bei der Lage der Einlassfläche in das Kabelauslasselement nach der vorliegenden Erfindung, dass die Querschnittsfläche der Einlassfläche bei dem Kabelauslasselement größer ist als bei der aus dem Stand der Technik bekannten Lage der Einlassfläche. Beim Stand der Technik ist es nur möglich, Leerrohre in ein Kabelauslasselement einzuführen, deren Querschnittsfläche deutlich kleiner ist als die Querschnittsfläche des Kabelauslasselementes.

Bei der Ausführung nach der vorliegenden Erfindung ist es bei einer entsprechenden Orientierung und Lage der Einlassfläche möglich, Leerrohre in das Kabelauslasselement einzuführen, deren Querschnittsfläche grundsätzlich größer sein kann als die Querschnittsfläche des Kabelauslasselementes.

Es können bei einer entsprechenden Lage und Orientierung der Einlassfläche beispielsweise auch Leerrohre eingeführt werden, deren Außendurchmesser dem Innendurchmesser des Kabelauslasselementes entspricht.

Diese Größer der Einlassfläche wird bereits dadurch erreicht, dass bei dem Schnitt, durch den sich die Einlassfläche ergibt, ein größerer Teil der zwischen Grundfläche des Zylinders abgeschnitten wird, als dies beim Stand der Technik der Fall ist.

Bei der Ausgestaltung nach Anspruch 1 setzt der Schnitt, den die Einlassfläche mit dem Zylinder bildet, in der zweiten Grundfläche des Zylinders bei wenigstens 75 % des Durchmessers des Zylinders an derart, dass die Schnittlinie in der Ebene der zweiten Grundfläche des Zylinders senkrecht orientiert ist zu diesem Durchmesser des Zylinders. Weiterhin ist die Schnittebene der Einlassfläche von dort ausgehend in Richtung der Mittellängsachse sowie in Richtung der ersten Grundfläche geführt.

Es hat sich gezeigt, dass mit dieser Ausgestaltung der Einlassfläche die Vorteile besonders gut erreicht werden können, die gegenüber dem Stand der Technik beschrieben sind.

Bei der Ausgestaltung nach Anspruch 2 ist die Ebene der Einlassfläche so orientiert, dass zu jedem Paar von Punkten entlang der Randlinie der Einlassfläche, das dadurch definiert ist, dass die Verbindungslinie dieser beiden Punkte die Mittellängsachse des Zylinders schneidet, der Abstand dieser beiden Punkte zur Randlinie der ersten Grundfläche unterschiedlich ist.

Das bedeutet, dass die beiden Punkte des Punktpaares sich insofern "einander gegenüber liegen", als dass deren Verbindungslinie die Mittellängsachse des Zylinders schneidet.

Die Verhältnisse lassen sich anhand eines "schrägen Schnitts" durch einen Zylinder erläutern. Ein Schnitt durch einen Zylinder lässt sich erzeugen, indem der Zylinder mit einem Messer mit einer flächigen (ebenen) Klinge ausgeführt wird, wobei die Klinge eine linienförmige Schnittkante aufweist. Es lassen sich dann folgende Fälle unterscheiden:
(1.) Die Mittellängsachse des Zylinders bildet die Flächennormale zu der Klinge. In diesem Fall wird ein Schnitt durch den Zylinder erzeugt, dessen Fläche parallel zur Grundfläche des Zylinders orientiert ist. Die Schnittfläche ist kreisförmig. Der Kreis hat denselben Radius wie der Zylinder.
(2.) Gegenüber der Orientierung der Klinge nach Punkt (1.) ist die Klinge insofern gedreht, dass die Mittellängsachse des Zylinders mit der Schnittkante der Klinge keinen rechten Winkel mehr bildet. Die Fläche der Klinge wird gegenüber der Orientierung nach Punkt (1.) nicht geneigt. Die Schnittfläche wird hierbei zu einer Ellipse, deren kürzere Halbachse (halbe Länge der Nebenachse der Ellipse) dem Radius des Zylinders entspricht. Die Länge der längeren Halbachse (halbe Länge der Hauptachse der Ellipse) ist abhängig von dem Winkel, den die Schnittkante der Klinge mit der Mittellängsachse des Zylinders bildet.
(3.) Ein vergleichbarer Schnitt durch den Zylinder ergibt sich, wenn gegenüber der Orientierung der Klinge nach Punkt (1.) die Fläche der Klinge geneigt wird. Die Orientierung der Schnittkante der Klinge relativ zur Mittellängsachse des Zylinders bleibt dabei unverändert. Die Schnittfläche wird wiederum zu einer Ellipse, deren kürzere Halbachse (halbe Länge der Nebenachse der Ellipse) dem Radius des Zylinders entspricht. Die Länge der längeren Halbachse (halbe Länge der Hauptachse der Ellipse) ist abhängig von dem Winkel, um den die Fläche der Klinge gegenüber der Orientierung der Fläche entsprechend dem Punkt (1.) geneigt ist.
(4.) Hierbei ergibt sich der Schnitt durch den Zylinder, indem die sowohl die Schnittkante der Klinge entsprechend dem Punkt (2.) gedreht ist und indem weiterhin auch die Ebene der Klinge entsprechend dem Punkt (3.) geneigt ist. Bei dem sich ergebenden Schnitt durch den Zylinder entsteht wiederum eine Ellipse. Bereits die kürzere Halbachse (halbe Länge der Nebenachse der Ellipse) ist in diesem Fall größer als der Radius des Zylinders.

Die Verhältnisse bei den beschriebenen Schnitten sind wie folgt:
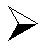 Beim Schnitt nach Punkt (1.) haben bei allen Punktpaaren die beiden Punkte einen identischen Abstand zur Randlinie der ersten Grundfläche.
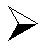 Beim Schnitt nach Punkt (2.) sowie auch beim Schnitt nach Punkt (3.) haben bei dem Punktpaar, dessen beide Punkte die Punkte der Ellipse sind, die den Schnittpunkt der Umfangslinie der Ellipse mit der kürzeren Halbachse darstellen, diese beiden Punkte einen identischen Abstand zur Randlinie der ersten Grundfläche. Bei allen anderen Punktpaaren entsprechend der Definition, dass deren Verbindungslinie die Mittellängsachse des Zylinders schneidet, haben die beiden Punkte einen unterschiedlichen Abstand zur Randlinie der ersten Grundfläche.
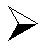 Beim Schnitt nach Punkt (4.) haben bei allen Punktpaaren entsprechend der Definition, dass deren Verbindungslinie die Mittellängsachse des Zylinders schneidet, die beiden Punkte einen unterschiedlichen Abstand zur Randlinie der ersten Grundfläche. Insofern hängen die Erläuterungen zu den verschiedenen Schnitten durch den Zylinder mit der Definition nach Anspruch 2 zusammen.

Es zeigt sich, dass mit einer Ausgestaltung der Einlassfläche entsprechend der Definition nach Anspruch 2 auch ein Leerrohr in das Kabelauslasselement eingeführt werden kann, dessen Durchmesser größer ist als der Durchmesser des Kabelauslasselementes.

Bei der Ausgestaltung nach Anspruch 3 ist das Kabelauslasselement ausgestaltet für eine Hohlwandinstallation.

Hierzu weist das Kabelauslasselement in an sich bekannter Weise Befestigungsmittel auf, die zum Hintergreifen der Beplankung der Hohlwand ausgestaltet sind, wenn in die Hohlwand ein Loch eingebracht wurde, das passgenau mit dem Außenumfang des Kabelauslasselementes korrespondiert.

Gerade bei der Hohlwandinstallation ergibt sich durch den Zwischenraum zwischen den sich gegenüberliegenden Beplankungen genügend Einbauraum für eine geeignete Lagerung und Führung der Leerrohre für die Elektroinstallation. Dies gilt insbesondere auch für die Krümmungsradien in dem gekrümmten Verlauf des Leerrohres für die erforderliche Richtungsänderung des Kabels von der Verlegerichtung hin zu der Richtung, in der das Kabel aus der Wand bzw. aus der Decke austritt.

Erfindungsgemäß ist die Einlassfläche durch eine weichelastische Membran verschlossen.

Dies erweist sich insofern als vorteilhaft, weil dadurch zum einen das Leerrohr dicht umschlossen wird, wenn dieses in das Kabelauslasselement eingeführt wird. Dadurch wird die Übertragung von Zugluft oder von Schall vorteilhaft vermieden.

Außerdem ergibt sich durch das Umschließen des Leerrohres beim Durchstoßen bzw. bei der Führung durch die weichelastische Membran, dass das Leerrohr durch das Umschließen mit der weichelastischen Membran mechanisch gehalten und damit gegen ein Herabfallen in den Zwischenraum zwischen den Beplankungen der Hohlwand gesichert wird.

Bei der Montage des Elektroinstallationsmaterial in der Hohlwandbauweise wird für den Kabelauslass ein Loch in die Beplankung gebohrt. Es wird dann die Verkabelung verlegt, bei der das Leerrohr - ob bereits mit einem darin verlegten Kabel oder noch ohne ein darin verlegtes Kabel - durch das Loch in Richtung der Innenseite des Raumes gezogen wird. Daran anschließend wird dieses Leerrohr an der Einlassfläche des Kabelauslasselementes angebracht und daran anschließend das Kabelauslasselement in das Loch eingeschoben. Dabei erweist es sich als vorteilhaft, wenn das Leerrohr gegen ein Herabfallen in die Hohlwand zwischen die Beplankungen gesichert ist.

Auch im Hinblick auf diese Montageweise bei der Hohlwandinstallation erweist sich die erfindungsgemäße Orientierung der Einlassfläche als vorteilhaft. Die Einlassfläche für das Leerrohr befindet sich dann nicht auf dem äußeren Umfang des Zylinders, sondern ist durch die beschriebene schräge Orientierung nach innen versetzt. Dadurch steht ein Leerrohr, das in diese Einlassfläche eingeführt ist, allenfalls geringfügig über den Außenumfang des Zylinders über. Dadurch kann das Leerrohr in der beschriebenen Weise "außerhalb" der Hohlwand auf der Raumseite der Beplankung in das Kabelauslasselement eingesetzt werden, wobei daran anschließend diese montierte Einheit insgesamt in das Loch eingesetzt werden kann, dass passgenau zum Umfang des Kabelauslasselementes in die Beplankung gebohrt wurde.

Bei der erfindungsgemäßen Ausgestaltung weist das Kabelauslasselement auf der inneren Oberfläche des Zylinders und / oder auf der äußeren Oberfläche des Zylinders eine Beschichtung aus einem intumeszierenden Material auf.

Dieses intumeszierende Material kann beispielsweise Blähgraphit sein. Dieses Material hat die Eigenschaft, sich bei Wärme stark auszudehnen. Damit lässt sich vorteilhaft eine Brandschutzwirkung erzielen. Das intumeszierende Material füllt dabei Leerräume in dem Kabelauslasselement aus, so dass die Ausbreitung von Rauchgasen sowie auch von Flammen vermieden wird. Damit wird erreicht, dass bei einem Brand in einem Raum ein benachbarter Raum nicht unmittelbar mit beeinträchtigt wird, weil Rauchgase oder Flammen durch die Wandöffnungen treten können, die durch die Elektroinstallation bedingt sind.

Diese Wirkung wird ersichtlich besonders vorteilhaft dann erreicht, wenn das intumeszierende Material eine Beschichtung auf der Innenseite des Zylinders ist. Das intumeszierende Material kann sich beim Ausdehnen in diesem Fall an der Wand des Kabelauslasselementes abstützen und dichtet dieses dann ab.

Die Ausgestaltung nach Anspruch 4 betrifft ein Montagesystem für die Elektroinstallation. Dieses Montagesystem besteht aus einem Kabelauslasselement nach einem der Ansprüche 1 bis 3 sowie einem Abschlusselement zum Verschließen der ersten Grundfläche des Kabelauslasselements. Das Abschlusselement weist einen weichelastischen und / oder intumeszierenden Materialanteil auf.

Dadurch lässt sich zunächst das Kabel ziehen bis dieses Kabel aus dem Kabelauslasselement austritt. Anschließend kann das Kabel durch das Abschlusselement geführt werden. Das Abschlusselement wird dann entlang dem Kabel in Richtung des Kabelauslasselementes geschoben und auf das Kabelauslasselement aufgesetzt bzw. in das Kabelauslasselement eingesetzt. Dadurch lässt sich das Kabel einfach montieren. Das Kabelauslasselement kann vorteilhaft dennoch dichtend abgeschlossen werden.

Mit einer Gestaltung nach Anspruch 4 kann alternativ oder auch ergänzend zur Gestaltung nach Anspruch 1 ein Kabelauslass realisiert werden, der abgedichtet ist: 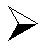
gegenüber Zugluft aus der Kabelauslassöffnung und
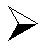 gegenüber einer Schallübertragung durch die Kabelauslassöffnung.
Dies lässt sich realisieren, indem das Abschlusselement einen weichelastischen Materialanteil aufweist. Das Abschlusselement kann dann von dem Kabel durchstoßen werden, das durch das Kabelauslasselement geführt werden soll. Dieses Kabel wird dann von dem Abschlusselement dichtend umschlossen.

Sofern das Abschlusselement einen Materialanteil mit intumeszierenden Eigenschaften aufweist, lässt sich weiterhin eine Brandschutzwirkung erzielen. Im Brandfall verschließt das intumeszierenden Material das Kabelauslasselement, so dass Rauchgase oder auch Flammen daran gehindert werden, durch das Kabelauslasselement hindurchzutreten.

Wenn das Abschlusselement sowohl weichelastisch als auch intumeszierend ist, kann dies realisiert werden, indem das Material des Abschlusselementes aus einer Materialmischung besteht, die einen weichelastischen Materialanteil aufweist, sowie einen intumeszierenden Materialanteil. Diese beiden Materialanteile sind in dem Material gemischt.

Das Abschlusselement kann weiterhin sowohl weichelastisch als auch intumeszierend sein, indem das Abschlusselement eine Schicht aus weichelastischem Material aufweist, auf die eine Schicht aus intumeszierendem Material aufgebracht ist. Vorteilhaft wird das Abschlusselement so montiert, dass die weichelastische Schicht zur Raumseite weist. Dadurch befindet sich die Schicht aus intumeszierendem Material im Inneren des Kabelauslasselementes. Dadurch stützt sich das intumeszierende Material bei dessen Ausdehnung im Brandfall an dem weichelastischen Material ab. Dadurch wird das Kabelauslasselement besonders effektiv verschlossen. Um ein Durchstoßen der aus dem weichelastischen Material bestehenden Schicht durch das Kabel nicht zu behindern, kann das intumeszierende Material lediglich im äußeren Bereich des Abschlusselementes nahe der Zylinderwand des Kabelauslasselementes angebracht sein. Dies kann beispielsweise realisiert sein, indem das intumeszierende Material ringförmig im Außenbereich des Abschlusselementes auf der Schicht aus weichelastischem Material angebracht ist.

Im Zusammenhang mit der vorliegenden Anmeldung gilt generell, dass das Schneiden der Mittellängsachse des Zylinders mit der Einlassfläche bedeutet, dass dieser Schnittpunkt auf der Mittellängsachse des Zylinders zwischen der ersten Grundfläche des Zylinders und der zweiten Grundfläche des Zylinders liegt.

Ein Ausführungsbeispiel der Erfindung ist in der Zeichnung dargestellt. Es zeigt dabei:
- Fig. 1:: ein Ausführungsbeispiel eines Kabelauslasselementes nach der vorliegenden Erfindung in einer seitlichen Ansicht,
- Fig. 2:: eine Darstellung des Kabelauslasselementes nach Figur 1 in einer perspektivischen Ansicht und
- Fig. 3:: eine Darstellung eines Kabelauslasselementes nach dem Stand der Technik.

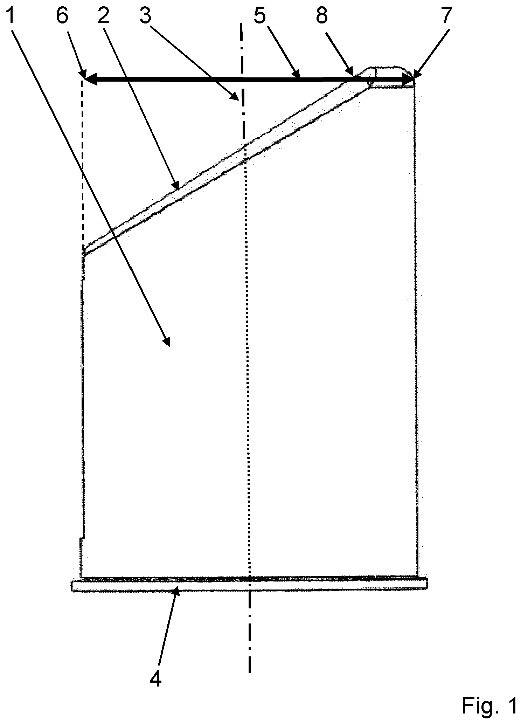

Figur 1 zeigt ein Ausführungsbeispiel eines Kabelauslasselementes 1 nach der vorliegenden Erfindung in einer seitlichen Ansicht. Es ist zu sehen, dass das Kabelauslasselement 1 eine zylindrische Grundform aufweist.

Im Bereich der ersten Grundfläche des Zylinders befindet sich eine Schulter 4, die etwas über den Außendurchmesser des Zylinders übersteht. Dies hat den Zweck, dass ein Loch mit dem Durchmesser in die Beplankung einer Hohlwandkonstruktion gebohrt wird, der dem Außendurchmesser des Zylinders entspricht. Wenn das Kabelauslasselement durch dieses Loch in den Zwischenraum zwischen den Beplankungen der Hohlwandkonstruktion eingeschoben wird, lässt sich diese Schulter 4 nicht durch das Bohrloch schieben, sondern liegt auf der Sichtseite zum Inneren des Raumes hin an der entsprechenden Beplankung an.

Die Grundfläche des Zylinders ist an diesem Ende im Inneren der Schulter 4 insoweit offen, als dass dort ein Kabel aus dem Kabelauslasselement 1 austreten kann. Eine einfache Möglichkeit der Montage ergibt sich, wenn die Fläche im Inneren der Schulter 4 vollständig offen ist. Nach der Montage des Kabels kann diese Öffnung dichtend abgeschlossen werden mit einem Abschlusselement, das im Zusammenhang mit Anspruch 4 erläutert wurde. Das Abschlusselement selbst ist in der Zeichnung nicht näher dargestellt.

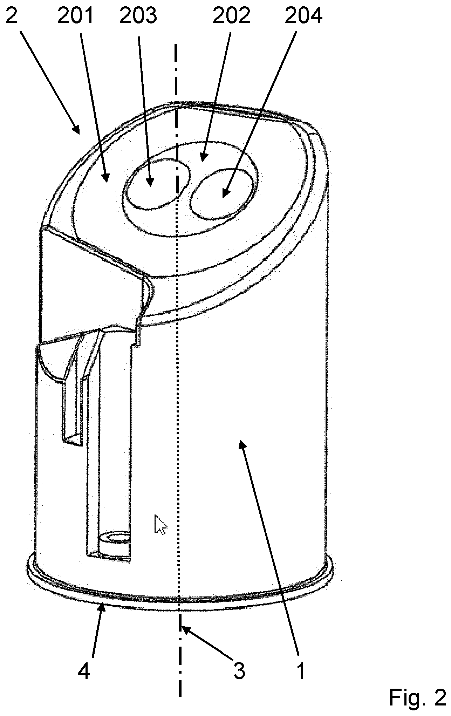

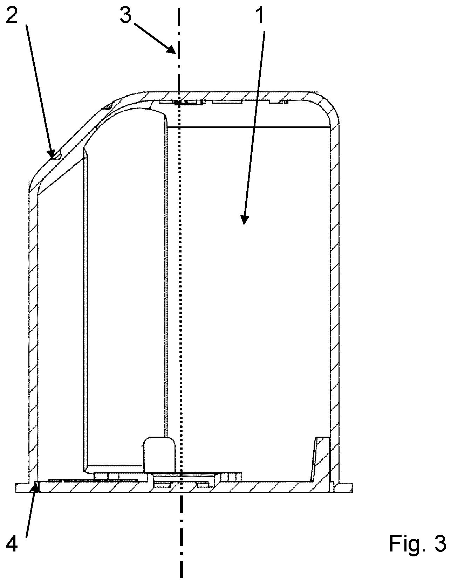

In der Darstellung der Figur 1 sowie auch in den Figuren 2 und 3 ist jeweils die Mittellängsachse 3 des Zylinders 1 dargestellt. Diese Mittellängsachse 3 ist punktiert dargestellt, soweit diese Mittellängsachse 3 im Inneren des Kabelauslasselementes 1 liegt. Soweit diese Mittellängsachse 3 außerhalb des Kabelauslasselementes 1 liegt, ist diese Mittellängsachse 3 strichpunktiert dargestellt.

Es ist zu sehen, dass das Kabelauslasselement 1 eine Einlassfläche 2 aufweist, über die entweder ein Kabel direkt in die Kabelauslassöffnung 1 eingeführt werden kann. An dieser Einlassfläche 2 kann auch ein Leerrohr befestigt werden, so dass ein durch das Leerrohr geführtes Kabel in die Kabelauslassöffnung 1 eingeführt werden kann. Das Kabel wird durch die Kabelauslassöffnung 1 durchgeführt und tritt an der ersten Grundfläche durch die Schulter 4 hindurch aus dem Kabelauslasselement 1 aus.

Es ist zu sehen, dass sich die Einlassfläche 2 im Bereich der zweiten Grundfläche des zylinderförmigen Kabelauslasselementes 1 befindet, die der ersten Grundfläche des zylinderförmigen Kabelauslasselementes 1 gegenüber liegt. Die Einlassfläche 2 ist gegenüber der Mittellängsachse 3 des zylinderförmigen Kabelauslasselementes 1 derart geneigt, dass die Flächennormale dieser Einlassfläche 2 schräg orientiert ist zur Mittellängsachse 3 des zylinderförmigen Kabelauslasselementes 1. Die Einlassfläche 2 stellt damit einen Schnitt durch das zylinderförmige Kabelauslasselement 1 dar. Dieser Schnitt geht teilweise durch die zweite Grundfläche 5 und erstreckt sich weiter durch die Seitenwand des Zylinders in Richtung der ersten Grundfläche 4 derart, dass dieser Schnitt zwischen der zweiten Grundfläche 5 und der ersten Grundfläche 4 aus dem Zylinder austritt. Es ist zu sehen, dass die Mittellängsachse 3 des Kabelauslasselementes 1 die Einlassfläche 2 schneidet.

Die zweite Grundfläche 5 ist durch die schräge Orientierung der Einlassfläche 2 teilweise weggeschnitten. Dies ist dargestellt durch die punktförmige Verlängerungslinie der einen seitlichen Begrenzung des Zylinders. Der Punkt mit der Bezugsziffer 6 markiert das eine Ende des Durchmessers (Linie zwischen den Punkten mit den Bezugsziffern 6 und 7). Es ist zu sehen, dass die Einlassfläche 2 in der Ebene der zweiten Grundfläche 5 auf der Linie des Durchmessers, der durch die Punkte 6 und 7 definiert ist, in dem Punkt 8 beginnt. Die Länge der Strecke von dem Punkt 6 zu dem Punkt 8 beträgt mehr als 75 % des Durchmessers (Strecke von dem Punkt 6 zu dem Punkt 7).

Figur 2 zeigt eine Darstellung des Kabelauslasselementes 1 nach Figur 1 in einer perspektivischen Ansicht. Gleiche Teile zur Darstellung der Figur 1 sind mit denselben Bezugszeichen versehen.

In der Darstellung der Figur 2 ist zu sehen, dass die Einlassfläche 2 unterteilt ist in mehrere Bereiche 201, 202, 203 und 204.

Diese Bereiche 201, 202, 203, und 204 können als sogenannte Ausbrechflächen ausgestaltet sein, so dass die eingezeichneten Linien, die diese Bereiche 201, 202, 203 und 204 trennen, Sollbruchlinie darstellen, entlang derer die Ausbrechflächen abtrennbar sind zum Öffnen der Einlassfläche 2 in der entsprechenden Form und Größe, die den jeweiligen Bereichen 201, 202, 203 sowie 204 entspricht.

Soweit die Einlassfläche 2 durch eine weichelastische Membran abgedeckt bzw. überdeckt ist, können diese Bereiche 201, 202, 203 und 204 voneinander abgetrennt sein, indem diese Bereiche 201, 202, 203 und 204 unterschiedliche Materialdicken aufweisen. Vorteilhafterweise sind die Materialdicken der weiter außen liegenden Bereiche größer als die Materialdicken der weiter innen liegenden Bereiche. Damit hat der Bereich 201 dann eine größere Materialdicke als der Bereich 202. Der Bereich 202 hat wiederum eine größere Materialdicke als der Bereich 203 sowie der Bereich 204. Die beiden Bereich 203 und 204 können dieselbe Materialdicke aufweisen.

Soweit die Einlassfläche 2 durch eine weichelastische Membran abgedeckt bzw. überdeckt ist, können diese Bereiche 201, 202, 203 und 204 alternativ voneinander abgetrennt sein, indem die weichelastische Membran eine konstante Materialdicke aufweist. Entlang der Linien, die diese Bereich 201, 202, 203 und 204 voneinander trennen, ist dann vorteilhaft eine mehr oder weniger linienförmige Verstärkung des weichelastischen Materials aufgetragen, beispielsweise in Form einer linienförmigen Materialverdickung.

Die Gestaltung der weichelastischen Membran führt dazu, dass Leerrohre unterschiedlichen Durchmessers eingeführt werden, wobei dennoch ein Ausreißen der Membran verhindert wird. Dadurch wird erreicht, dass das entsprechende Leerrohr von der weichelastischen Membran abschließend umschlossen wird.

Der Bereich 202 ist für das Einführen eines Leerrohres mit einem geringeren Durchmesser vorgesehen als dies dem Bereich 201 entspricht.

In dem Bereich 202 sind nochmals kleinere Bereich 203 und 204 abgetrennt. In diesen Bereichen können wiederum entsprechend kleiner Leerrohre eingeführt werden. Gegebenenfalls können in diesen Bereichen auch Kabel direkt in das Kabelauslasselement 1 eingeführt werden, wenn die Kabel ohne Leerrohr verlegt werden.

Figur 3 zeigt eine Darstellung eines Kabelauslasselementes 1 nach dem Stand der Technik. Es ist zu sehen, dass dort die Einlassfläche 2 nicht die Mittellängsachse 3 des Zylinders 1 schneidet.

## Patentansprüche

1. Kabelauslasselement (1) für die Elektroinstallation,
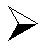 wobei das Kabelauslasselement (1) eine zylindrische Form aufweist,
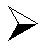 wobei eine erste der beiden Grundflächen (4) des Zylinders eine Kabelauslassöffnung bildet,
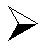 wobei im Bereich der zweiten der beiden Grundflächen (5) des Zylinders eine Einlassfläche (2) angeordnet ist,
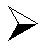 wobei die Flächennormale dieser Einlassfläche (2) schräg orientiert ist zur Mittellängsachse (3) des Zylinders derart, dass die Einlassfläche (2) einen Schnitt durch den Zylinder darstellt,
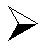 der teilweise durch die zweite Grundfläche (5) geht und
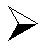 der sich weiter durch die Seitenwand des Zylinders in Richtung der ersten Grundfläche (4) erstreckt derart, dass dieser Schnitt zwischen der zweiten Grundfläche (5) und der ersten Grundfläche (4) aus dem Zylinder austritt,
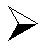 wobei die Einlassfläche (2) durch eine weichelastische Membran verschlossen ist, und
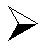 wobei das Kabelauslasselement (1) auf der inneren Oberfläche des Zylinders und / oder auf der äußeren Oberfläche des Zylinders zumindest in einem Teilbereich eine Beschichtung aus einem intumeszierenden Material aufweist,
**dadurch gekennzeichnet,**
**dass** die Mittellängsachse (3) des Zylinders die Einlassfläche (2) schneidet, und dass der Schnitt, den die Einlassfläche (2) mit dem Zylinder bildet, in der zweiten Grundfläche (5) des Zylinders bei wenigstens 75% (6 <=> 8) des Durchmessers (6 <=> 7) des Zylinders ansetzt derart,
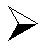 dass die Schnittlinie in der Ebene der zweiten Grundfläche (5) des Zylinders senkrecht orientiert ist zu diesem Durchmesser (6 <=> 7) des Zylinders
und
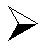 dass die Schnittebene der Einlassfläche (2) von dort ausgehend in Richtung der Mittellängsachse (3) des Zylinders sowie in Richtung der ersten Grundfläche (4) geführt ist.

2. Kabelauslasselement (1) nach Anspruch 1,
**dadurch gekennzeichnet, dass** die Ebene der Einlassfläche (2) so orientiert ist, dass die beiden Punkte jedes Paares von Punkten entlang der Randlinie der Einlassfläche (2) einen unterschiedlichen Abstand zur Randlinie der ersten Grundfläche (4) aufweisen, wenn für das Punktpaar gilt, dass die Verbindungslinie der beiden Punkte des Punktpaares die Mittellängsachse (3) des Zylinders schneidet.

3. Kabelauslasselement (1) nach einem der Ansprüche 1 bis 2,
**dadurch gekennzeichnet, dass** das Kabelauslasselement (1) ausgestaltet ist für eine Hohlwandinstallation.

4. Montagesystem für die Elektroinstallation, bestehend aus einem Kabelauslasselement (1) nach einem der Ansprüche 1 bis 3 sowie einem Abschlusselement zum Verschließen der ersten Grundfläche des Kabelauslasselements (1), wobei das Abschlusselement einen weichelastischen und / oder intumeszierenden Materialanteil aufweist.

## Claims

1. Cable outlet element (1) for electrical installations,
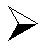 wherein the cable outlet element (1) has a cylindrical shape,
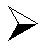 wherein a first of the two base surfaces (4) of the cylinder forms a cable outlet opening,
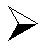 wherein an inlet surface (2) is arranged in the region of the second of the two base surfaces (5) of the cylinder,
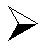 wherein the normal to this inlet surface (2) is oriented obliquely to the central longitudinal axis (3) of the cylinder in such a way that the inlet surface (2) forms a cross-section through the cylinder,
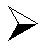 which passes partly through the second base surface (5) and
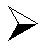 which extends further through the side wall of the cylinder towards the first base surface (4) in such a way that this section emerges from the cylinder between the second base surface (5) and the first base surface (4),
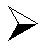 wherein the inlet surface (2) is sealed by a soft-elastic membrane, and
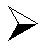 wherein the cable outlet element (1) has on the inner surface of the cylinder and/or on the outer surface of the cylinder, at least in a partial area, a coating of an intumescent material,
**characterised in**
**that** the central longitudinal axis (3) of the cylinder intersects the inlet surface (2), and that the intersection formed by the inlet surface (2) and the cylinder begins in the second base surface (5) of the cylinder at a point corresponding to at least 75% (6 <=> 8) of the diameter (6 <=> 7) of the cylinder, such that 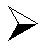
**that** the line of intersection in the plane of the second base surface (5) of the cylinder is oriented perpendicular to this diameter (6 <=> 7) of the cylinder
and
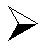 that the plane of intersection of the inlet surface (2) extends from there in the direction of the central longitudinal axis (3) of the cylinder and in the direction of the first base surface (4).

2. Cable outlet element (1) according to claim 1,
**characterized in that** the plane of the inlet surface (2) is oriented such that the two points of each pair of points along the boundary line of the inlet surface (2) are at different distances from the boundary line of the first base surface (4), provided that, for the pair of points, the line connecting the two points of the pair intersects the central longitudinal axis (3) of the cylinder.

3. Cable outlet element (1) according to one of claims 1 to 2,
**characterized in that** the cable outlet element (1) is designed for installation in a cavity wall.

4. An mounting system for electrical installations, comprising a cable outlet element (1) according to any one of claims 1 to 3 and a sealing element for sealing the first base surface of the cable outlet element (1), wherein the sealing element comprises a soft-elastic and/or intumescent material component.

## Revendications

1. Élément de sortie de câble (1) pour installation électrique,
» dans lequel l'élément de sortie de câble (1) présente une forme cylindrique,
» dans lequel une première des deux surfaces de base (4) du cylindre forme une ouverture de sortie de câble,
» dans lequel une surface d'entrée (2) est disposée au niveau de la deuxième des deux surfaces de base (5) du cylindre,
» dans lequel la normale à la surface de cette surface d'entrée (2) est orientée obliquement par rapport à l'axe longitudinal central (3) du cylindre, de telle sorte que la surface d'entrée (2) représente une section à travers le cylindre,
» qui traverse partiellement la deuxième surface de base (5) et
» qui traverse également la paroi latérale du cylindre dans la direction de la première surface de base (4), de telle sorte que cette section sorte du cylindre entre la deuxième surface de base (5) et la première surface de base (4),
» dans lequel la surface d'entrée (2) est fermée par une membrane élastique souple et
» dans lequel l'élément de sortie de câble (1) présente au moins dans une zone partielle un revêtement sur la surface intérieure du cylindre et/ou sur la surface extérieure du cylindre constitué d'un matériau intumescent,
**caractérisé en ce que**
l'axe longitudinal central (3) du cylindre coupe en intersection la surface d'entrée (2), et que la section, que forme la surface d'entrée (2) avec le cylindre, commence sur la deuxième surface de base (5) du cylindre à au moins 75 % (6<=>8) du diamètre (6<=>7) du cylindre, de sorte que
» la ligne de coupe dans le plan de la deuxième surface de base (5) du cylindre soit orientée perpendiculairement à ce diamètre (6<=>7) du cylindre,
et
» le plan de coupe de la surface d'entrée (2) se prolonge à partir de ce point dans la direction de l'axe longitudinal central (3) du cylindre ainsi que dans la direction de la première surface de base (4).

2. Élément de sortie de câble (1) selon la revendication 1,
**caractérisé en ce que** le plan de la surface d'entrée (2) est orienté de telle sorte que les deux points de chaque paire de points situés le long de la ligne de contour de la surface d'entrée (2) soient à une distance différente de la ligne de contour de la première surface de base (4), à condition que la ligne de liaison des deux points de la paire de points coupe en intersection l'axe longitudinal (3) du cylindre.

3. Élément de sortie de câble (1) selon une quelconque des revendications 1 à 2,
**caractérisé en ce que** l'élément de sortie de câble (1) est conçu pour une installation dans une paroi creuse.

4. Système de montage pour installation électrique, comprenant un élément de sortie de câble (1) selon une quelconque des revendications 1 à 3 ainsi qu'un élément de fermeture destiné à obturer la première surface de base de l'élément de sortie de câble (1), dans lequel l'élément de fermeture comporte une proportion de matériau souple, élastique et/ou intumescent.
